# EUROPEAN PATENT APPLICATION

(11) **EP 2 385 492 A1**
(43) Date of publication of application: **09.11.2011**
(21) Application number: 11161185.1
(22) Date of filing: 05.04.2011
(51) Int. Cl.: G06Q 30/00

(54) **Virtual shopping method**

(30) Priority: 06.04.2010 TW 099110535; 08.10.2010 TW 099134327; 12.11.2010 TW 099139077
(71) Applicant: UTW Technologies Corporation, Taipei (TW)
(72) Inventor: Li, Yu-Hsien, Taipei (TW)
(74) Representative: von Kreisler Selting Werner

(57) **Abstract**

A virtual shopping method for use with an electronic device is provided. The virtual shopping method includes displaying a virtual environment view, wherein the virtual environment view includes a plurality of images. The plurality of images includes at least an environment changing image, wherein the plurality of images are disposed within the virtual environment view in a customary manner and the spatial arrangements of the images in the virtual environment view are associated with each other. Next, the virtual shopping method includes selecting the environment changing image to enable the electronic device to receive other virtual environment information for producing other virtual environment view, wherein the other virtual environment view includes a plurality of other images. The plurality of other images includes a product image, wherein the plurality of other images are disposed in the other virtual environment view in the customary manner and the spatial arrangements of the plurality of other images in the virtual environment view are associated with each other and the product image is generated in accordance with a product information. Next, the virtual shopping method includes displaying the other virtual environment view as well as selecting the product image to carry out a transaction procedure.

## Description

### BACKGROUND OF THE INVENTION

### 1. Field of the Invention

The present invention generally relates to a virtual shopping method. Particularly, the present invention relates to a virtual shopping method for use with an electronic device.

### 2. Description of the Prior Art

Accompanying the rapid advancement in electronic technologies, various handheld electronic products have greatly enriched the consumer market, satisfying consumers' diverse appetite of handheld electronic products for work and entertainment. For instance, handheld electronic products such as Mobile Internet Devices (MID), Personal Digital Assistants (PDA), E-books, digital photo frames, digital music players, electronic dictionaries, and Global Positioning System Navigators (GPS Navigators) have all contributed to satisfying consumers' demands for various handheld electronic devices. Simultaneously, in accompanying the rapid advancement in electronic technologies as well as the adoption of internet usage as a normal part of life, online virtual shopping via handheld electronic products has also become an important application.

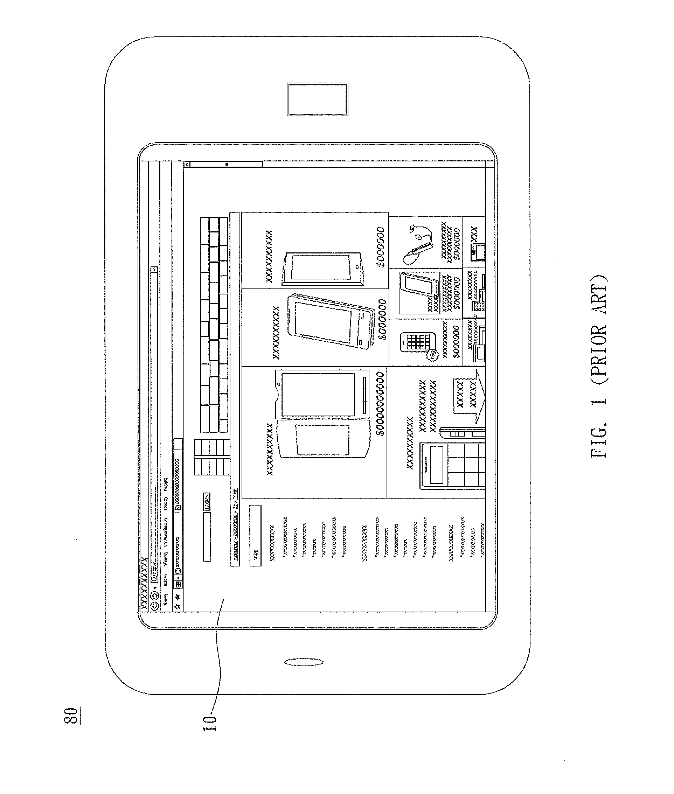

Online shopping typically refers to conducting transactions on an online transaction platform. However, as shown in FIG. 1, the display of online transaction platform is typically disarraying and miscellaneous in order. Additionally, the product layouts of each online transaction platform are different, which requires consumers to expend a high amount of time and energy in order to locate desired products. Conversely, the differences in product layouts of actual stores in real life are not as great. When shopping in actual stores in real life, consumers may easily locate desired products.

On the other hand, when consumers are selecting products on a typical online transaction platform, products must be individually selected in order to show their product information. In terms of product aesthetics, which is the most frequently compared trait of products by shopping consumers, consumers can only decipher product dimensions from the product information when shopping on an online transaction platform, whereas the differences in product sizes may only be inferred and imagined to understand. Conversely, when consumers are shopping in actual stores in real life, the product dimensions and the size difference between different products can be instantly seen and known. In addition, consumers in actual stores in real life may further try and test the products before purchasing. The act of trying products first before deciding to purchase benefits consumers when trying to determine which product is the most suitable product for the consumer. Therefore, the existing online shopping method is still improvable.

### SUMMARY OF THE INVENTION

It is an object of the present invention to provide a virtual shopping method for use with an electronic device so that users controlling the electronic device may more easily purchase products according to instinctive life experiences through the electronic device.

It is another object of the present invention to provide a virtual shopping method for use with an electronic device so that users may first evaluate the suitability of products before purchasing.

The virtual shopping method of the present invention includes displaying a virtual environment view, wherein the virtual environment view includes a plurality of images. The plurality of images includes at least an environment changing image, wherein the plurality of images are disposed within the virtual environment view in a customary manner and the spatial arrangements of the images in the virtual environment view are associated with each other. Next, the virtual shopping method includes selecting the environment changing image to enable the electronic device to receive other virtual environment information for producing other virtual environment view, wherein the other virtual environment view includes a plurality of other images. The plurality of other images includes a product image, wherein the plurality of other images are disposed in the other virtual environment view in the customary manner and the spatial arrangements of the plurality of other images in the virtual environment view are associated with each other and the product image is generated in accordance with a product information. Next, the virtual shopping method includes displaying the other virtual environment view as well as selecting the product image to carry out a transaction procedure.

The plurality of images further includes a background image, wherein the environment changing image is disposed therein in the customary manner. The spatial arrangement of the background image within the virtual environment view is associated with the environment changing image. The plurality of other images further includes other environment changing image, wherein the other environment changing image is disposed therein in the customary manner. The spatial arrangement of the other background image in the virtual environment view is associated with the other environment changing image as well as the product image.

The virtual environment view and the other virtual environment view are the virtual views of the real life environment. The electronic device has a screen. The virtual environment view displaying step includes enabling the screen to display the virtual environment view. The other environment view displaying step includes enabling the screen to display the other environment view. The environment changing image selecting step includes selecting the environment changing image on the screen. The product image selecting step includes selecting the product image on the screen. The screen includes a touch sensitive screen. In different embodiments, the electronic device has a sensor and is connected with a display device. The virtual environment view displaying step includes displaying the virtual environment view through the display device. The other virtual environment view displaying step includes displaying the other virtual environment view through the display device. The environment changing image selecting step includes sensing through the sensor of an action of user selecting the environment changing image. The product image selecting step includes sensing through the sensor of an action of users selecting the product image. The display device includes a projector. The sensor includes a motion sensitive sensor.

The customary manner refers to the customary arrangements of real life objects in the real life of the electronic device user that correspond to the environment changing image, the other environment changing image, and the product image.

The virtual shopping method, before the step of selecting the environment changing image, further includes enabling the electronic device to connect with other electronic device to allow the other electronic device to receive the other virtual environment information.

The environment changing image selecting step includes enabling the electronic device to receive by a server the other virtual environment information, wherein the server stores the other virtual environment information. The server can also connect to the other electronic devices. The other virtual environment view information is received by the server from the other electronic device, and then received by the electronic device from the server. In a different embodiment, the environment changing image selecting step includes enabling the electronic device to connect to the other electronic device so that the other electronic device receives the other virtual environment view information.

The product information includes three-dimensional image information of the real actual product, the dimensional information of the real actual product, or other related information. The transaction procedure includes auction transaction procedure, payment procedure, and other such related procedures. The plurality of other images further include a storage image. The product image selecting step further includes dragging the product image on the other virtual environment view to the storage image. The product image selecting step further includes selecting the other virtual environment changing image.

The virtual shopping method further includes enabling the electronic device to receive the product information prior to the step of transmitting transaction request signal. After receiving the product information, the virtual shopping method further includes switching on the virtual trial usage module, enabling the virtual trial usage module to produce a product trial usage result in accordance to usage indicator information and to the product information, and displaying the product trial usage result. The subject matter information includes photos, the three dimensional information of the subject matter, spatial information, or other such related information.

### BRIEF DESCRIPTION OF THE DRAWINGS

FIG. 1 is a schematic diagram of the prior art;

FIG. 2 is a flowchart of a preferred embodiment; and

FlGs. 3A and 3B are schematic diagrams of embodiments of the present invention.

### DETAILED DESCRIPTION OF THE PREFERRED EMBODIMENT

The present invention provides a virtual shopping method for use with an electronic device. The electronic device is preferably portable for users' convenience, such as mobile cellular phones, mobile internet devices (MID), personal digital assistants (PDA), E-books, digital photo frames, digital music players, electronic dictionaries, global positioning system navigators (GPS navigators), laptop computers, and other such related electronic devices. However, in other embodiments, the electronic device is not limited to just electronic devices with mobile characteristics; the electronic device may also be desktop computers, tablet computers, multimedia televisions, and other such electronic devices that are larger in dimension or size.

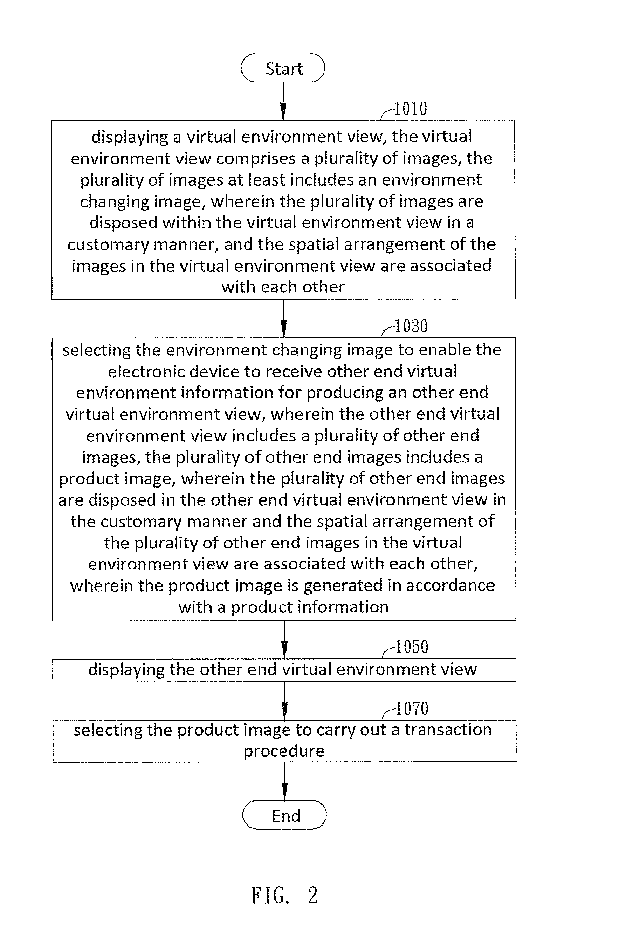

As shown in FIG. 2, the virtual shopping method of the present invention includes the following steps.

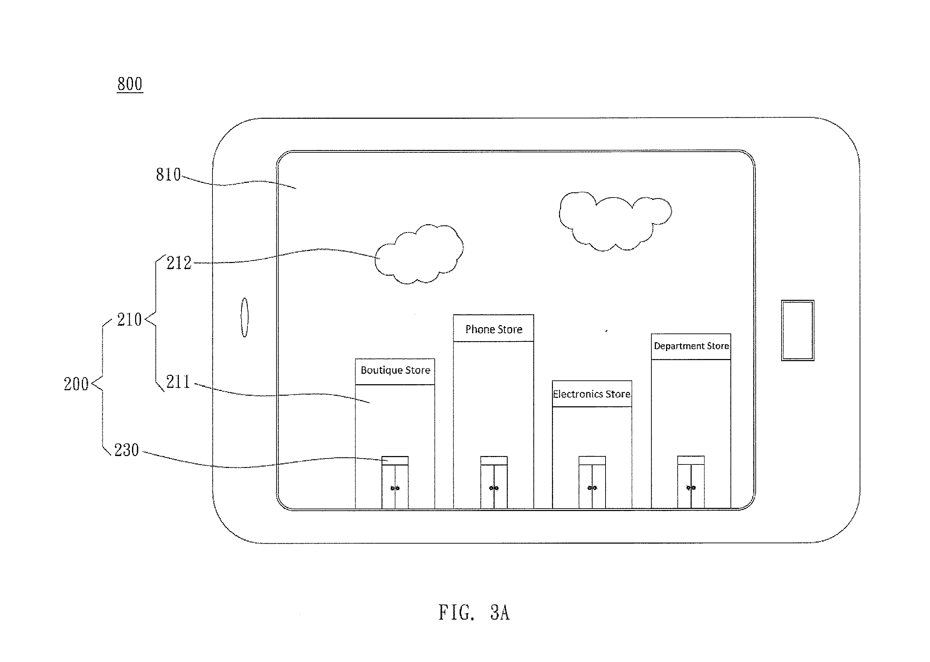

Step 1010 includes displaying a virtual environment view. The virtual environment view includes a plurality of images. The plurality of images at least includes an environment changing image, wherein the plurality of images are disposed in a customary manner within the virtual environment view and the spatial arrangements of the plurality of images in the virtual environment view are associated with each other. More concretely, the virtual environment view and the other virtual environment view are virtual images of actual real environments. As shown in FIG. 3A of a preferred embodiment, the virtual environment view 810 is a virtual view of a typical actual street, wherein a building 211 and a cloud 212 collectively make up a background image 210 while the building door is an environment changing image 230. In other words, in the preferred embodiment, a plurality of images 200 further includes the background image 210, the environment changing image 230 is disposed in the customary manner within the background image 210, and the spatial arrangement of the background image 210 within the virtual environment view 810 is associated with the environment changing image 230, wherein the background image 210 may be background of the entire virtual environment view 810.

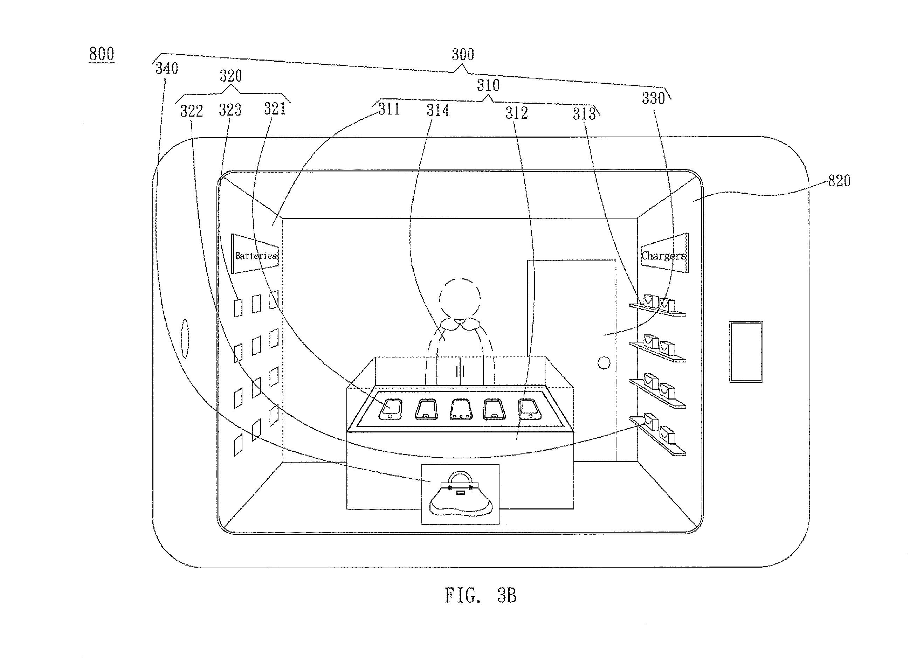

Step 1030 includes selecting the environment changing image to enable the electronic device to receive other virtual environment information for producing other virtual environment view. The other virtual environment view includes a plurality of other images, wherein the plurality of other images include at least a product image. The plurality of other images preferably further include other environment changing image, wherein the plurality of other images is disposed in customary manner within the other virtual environment view and the spatial arrangement within the virtual environment view is associated with the plurality of other images. The product image is produced in accordance to product information, wherein the product information preferably corresponds to actual real products. More specifically, as shown in FIG. 3B of a preferred embodiment, the other virtual environment view 820 is a virtual view of an actual typical telecommunications store. Walls 311, a showcase 312, shelves 313, and a store employee 314 all make up the other background image 310. The exit door is the other environment changing image 330 while cell phones 321, chargers 322, and batteries 323 are product images 320. In other words, in the preferred embodiment, the plurality of other images 300 further include the other background image 310. The other environment changing image 330 is disposed in customary manner within the other background image 310. The spatial arrangement of the other background image 310 within the other virtual environment view 820 is associated with the other environment changing image 330 and the product images 320, wherein the other background image 310 may be the background of the entire other virtual environment view 820. In a different embodiment, the other environment view 820 is not only restricted to being a virtual view of a store. For instance, the virtual view of the store may be replaced by a virtual view of a typical living room, while the product images may include furniture or personal items.

The customary manner refers to the usual arrangements of the real objects corresponding to the environment changing image, the other environment changing image, and the product image that are arranged or decorated by users of the electronic device in real life. As mentioned above, the spatial arrangement of the background image 210 within the virtual environment view 810 is associated with the environment changing image 230. The spatial arrangement of the other background image 310 within the other virtual environment view 820 is associated with the other environment changing image 330 and the product image 320. The mentioned association is preferably in line with a typical person's life experience and instincts. For instance, on streets in real life, the main entrances of stores are on the first floor. In accordance with people's intuition in real life, stores may be entered through the main entrance to purchase products within the stores. Therefore, as shown in FIG. 3A within the virtual environment view 810, the environment changing image 230 is a building door disposed on the first floor of the building image 211. Due to the fact that the environment changing image 230 is disposed within the background image 210 in the customary manner, users are able to easily locate the environment changing image 230 within the virtual environment view 810 according to their intuition, and thus also easily locate the store entrance to proceed with product purchases.

Similarly, in cell phone stores in real life, hang packaged batteries are typically hung on retail pegs (or also known as hooks) that are mounted on walls while box-shaped packaged chargers are typically placed on shelves and cell phones are typically exhibited in showcases. Therefore, as shown in FIG. 3B of the virtual store image (the other virtual environment view 820), the image of the hang packaged battery 323 is disposed on the wall 311 of the other background image 310. The image of box-shaped packaged charger 322 is disposed on the shelf 313 of the other background image 310. Due to the fact that product image 320 is disposed within the other background image 310 in the customary manner, users can easily locate by real life intuition the product image 320 within the virtual store image. In addition, in the preferred embodiment, users can easily locate the other environment changing image 330 within the virtual store image. As such, users can easily locate the store exit to end their shopping experience and leave the store.

In a preferred embodiment, the virtual environment view 810 and the other virtual environment view 820 include continuous three-dimensional images. More specifically, users may display different perspectives of the virtual environment view 810 and the other virtual environment 820 by selecting the directional cursor or by directly dragging or sliding on the image. In this way, the virtual environment view 810 and the other virtual environment view 820 may be more realistic and as a result allow the electronic device 800 to be more user-friendly.

On the other hand, having an association may also refer to the other background image and the product image displaying real actual life size and dimensional ratios within the other virtual environment view. Since in the preferred embodiment the product information corresponds to real actual products, the product image can be produced according to three-dimensional photo information, real dimensional information, or any other related product information of the real actual product. Therefore, the product image and the other background image in the spatial arrangement of the other virtual environment view may satisfy the ratio of real life objects. In other words, users can infer by observing the product images within the virtual environment view the size of the real actual products corresponding to each product image. However, in a different embodiment, the product information is not limited to the corresponding real actual products; the product images may also be produced from information of virtual products.

Step 1050 includes displaying the other virtual environment view.

Step 1070 includes selecting the product image to proceed with a transaction procedure.

More specifically, in a preferred embodiment, the electronic device has a screen. Step 1010 includes enabling the screen to display the virtual environment view. Step 1050 includes enabling the screen to display the other virtual environment view. Step 1030 includes selecting the environment changing image on the screen. Step 1070 includes selecting the product image on the screen. The screen includes a touch sensitive screen. In different embodiments, the electronic device has a sensor and is connected to a display device. Step 1010 includes displaying the virtual environment view through the display device. Step 1050 includes displaying the other virtual environment view through the display device. Step 1030 includes sensing through the sensor of an action of user selecting the environment changing image. Step 1070 includes sensing through the sensor of an action of users selecting the product image. The display device includes a projector. The sensor includes a motion sensitive sensor.

The transaction procedure is preferably a payment procedure. The payment procedure would allow users to input or transmit signature data (such as an electronic identification certificate), credit card data, debit card data, virtual monetary data, or any other such data to proceed with online payments. In a different embodiment, the transaction procedure may be an auction procedure that allows many users to input their bidder identification data and bid amounts and participate in online product auctions. Online payment and online auctions are already well known and used worldwide, and as such they will not be further discussed here.

In summary of the above mentioned, users using the virtual shopping method of the present invention may more easily locate by intuition the product image within the other virtual environment view (preferably a virtual store view). The users may then immediately select the product and proceed with the purchase. In comparison to conventional methods of picking out words representing product classifications to finally find products, users of the virtual shopping method of the present invention may more easily purchase products through the electronic device. In addition, in the preferred embodiment, the spatial arrangement in association with the product image and the other background image (preferably a store background image) within the other virtual environment view satisfies the dimensional ratios of real life objects. As such, users can infer the size of real actual products that correspond to each product image by observing the product images within the virtual store view. In this way, users may first evaluate the suitability of the products before purchasing thereof.

In a different embodiment, the plurality of other images 300 further includes a storage image 340. Step 1070 further includes dragging the product image 320 on the other virtual environment view 820 to the storage image 340. More specifically, as shown FIG. 3B of the preferred embodiment, users can indicate their desire to purchase a product by dragging the corresponding virtual product image 320 on the other virtual environment view 820 to the storage image 340. At this point, users may proceed with the transaction procedure. In addition, step 1070 may further include selecting the other virtual environment changing image 330, which allows users to be able to first drag multiple product images 320 to the storage image 340, and then proceed with the payment procedure after selecting the other virtual environment changing image 330.

In a preferred embodiment, the environment changing image selecting step includes enabling the electronic device to receive by a server the other virtual environment information, wherein the server stores the other virtual environment information. The other virtual environment information may be stored on the server so that the electronic device may download and receive the other virtual information from the server. However, the server may connect with other electronic device. The other virtual environment view information is received by the server from the other electronic device. The other virtual environment view information is then received by the electronic device from the server. In other words, the other virtual environment view information need not directly be stored within the server, wherein the other virtual environment view information transmitted by the other electronic device only passes through the server and is received by the electronic device.

In a different embodiment, the virtual environment changing image selecting step includes enabling the electronic device to connect with the other electronic device to allow the other electronic device to receive the other virtual environment changing image information. More specifically, in the different embodiment, the other virtual environment view information need not pass through the server. Rather, the other virtual environment changing information may be transmitted directly from the other electronic device to the electronic device.

Although the preferred embodiments of the present invention have been described herein, the above description is merely illustrative. Further modification of the invention herein disclosed will occur to those skilled in the respective arts and all such modifications are deemed to be within the scope of the invention as defined by the appended claims.

## Claims

1. A virtual shopping method for and electronic device to use, comprising:
displaying a virtual environment view comprising a plurality of images, the
plurality of images comprising at least one environment changing image, wherein the plurality of images are disposed within the virtual environment view in a customary manner, the spatial arrangements of the images in the virtual environment view are associated with each other;
selecting the environment changing image to enable the electronic device to
receive other virtual environment information for producing other virtual environment view, wherein the other virtual environment view includes a plurality of other images, the plurality of other images includes a product image, wherein the plurality of other images are disposed in the other virtual environment view in the customary manner and the spatial arrangement of the plurality of other images in the virtual environment view are associated with each other, wherein the product image is generated in accordance with a product information;
displaying the other virtual environment view; and
selecting the product image to carry out a transaction procedure.

2. The virtual shopping method of claim 1, wherein the plurality of images further comprises a background image, the environment changing image is disposed within the background image in the customary manner, the spatial arrangement of the background image within the virtual environment view is associated with the environment changing image.

3. The virtual shopping method of claim 1, wherein the plurality of other images further comprises other environment changing image.

4. The virtual shopping method of claim 3, the plurality of the other images further comprises other background image, the other environment changing image is disposed in the customary manner in the other background image, the spatial arrangement of the other background image in the virtual environment view is associated with the other environment changing image as well as the product image.

5. The virtual shopping method of claim 1, wherein the electronic device has a screen, the step of display the virtual environment view comprises enabling the screen to display the virtual environment view, the step of displaying the other environment view comprises enabling the screen to display the other virtual environment view, the step of selecting the environment changing image comprises selecting the environment changing image on the screen, the step of selecting of the product image comprises selecting the product image on the screen.

6. The virtual shopping method of claim 1, the virtual environment view and the other virtual environment view are a virtual display of reality.

7. The virtual shopping method of claim 1, the virtual environment view and the other virtual environment view comprise continuous three dimensional images.

8. The virtual shopping method of claim 7, before the step of selecting the environment changing image, further comprising displaying the virtual environment view from a different perspective.

9. The virtual shopping method of claim 1, wherein the images or the other images are disposed in the customary manner comprises the images or the other images are disposed in a same manner as real objects corresponding to the environment changing image, the other environment changing image, and the product image being arranged and decorated in a real environment

10. An virtual shopping method of claim 1, wherein the step of selecting the environment changing image comprises enabling the electronic device to connect with other electronic device to allow the other electronic device to receive the other virtual environment information.

11. The virtual shopping method of claim 1, wherein the step of selecting the environment changing image comprises enabling the electronic device to receive by a server the other virtual environment information.

12. The virtual shopping method of claim 11, wherein the server stores the other virtual environment information.

13. The virtual shopping method of claim 11, wherein the server has a connection with and other electronic device, the other virtual environment information is received by the server from the other electronic device and then received by the electronic device from the server.

14. The virtual shopping method of claim 1, wherein the plurality of other images further comprises a storage image, the step of selecting the product image further comprises dragging the product image on the other virtual environment view to the storage image.

15. The virtual shopping method of claim 14, wherein the step of selecting the product image further comprises selecting the other virtual environment changing image.
